# EUROPÄISCHE PATENTANMELDUNG

(11) **EP 1 058 139 A1**
(43) Veröffentlichungstag der Anmeldung: **06.12.2000**
(21) Anmeldenummer: 00110488.4
(22) Anmeldetag: 17.05.2000
(51) Int. Cl.: G02B 6/38

(54) **Ferrule für einen Lichtwellenleiter und Verfahren zum Befestigen der Ferrule an dem Lichtwellenleiter**

(30) Priorität: 20.05.1999 DE 19923246
(71) Anmelder: Tyco Electronics Logistics AG, 9323 Steinach / SG (CH)
(72) Erfinder: Krah, Thorsten, Dipl.-Ing. (BA), 67122 Altrip (DE); Bauer, Jürgen, Dipl.-Ing., 85049 Ingolstadt (DE)
(74) Vertreter: Heinz-Schäfer, Marion

(57) **Zusammenfassung**

Eine erfindungsgemäße Ferrule (4) für einen Lichtwellenleiter (1) zeichnet sich dadurch aus, daß die Ferrule (4) aus Kunststoff hergestellt ist und am Lichtwellenleiter (1), der auch aus Kunststoff besteht, vorzugsweise mittels Ultraschall verschweißt wird. Am Mantel (2) des Lichtwellenleiters (1) sind dabei Vertiefungen (3) ausgebildet, die neben dem Stoffschluß beim Verschweißen auch einen Formschluß herstellen.

## Beschreibung

Die vorliegende Erfindung betrifft eine Ferrule für einen Lichtwellenleiter und ein Verfahren zum Befestigen einer Ferrule an einem Lichtwellenleiter.

Bei der Kopplung von elektrooptischen Sendern, wie zum Beispiel LED's und Laserdioden und elektrooptischen Empfängern, wie zum Beispiel Photodioden und Phototransistoren mittels einer lichtleitenden Faser, oder bei der optischen Verbindung von zwei getrennten Lichtwellenleitern (z.B. aus Kunststoff) miteinander, ergibt sich das Problem, daß die Stirnflächen der lichtleitenden Fasern zu den korrespondierenden Sende- oder Empfangsflächen sehr genau in Position gebracht und gehalten werden müssen. Dabei müssen die optischen Achsen präzise zur Deckung gebracht werden und sehr nahe aneinander anschließen, d.h. sie müssen sowohl in radialer als auch in axialer Richtung exakt positioniert werden.

Um eine einwandfreie Ankopplung eines Lichtwellenleiters zu einem Sender oder zu einem Empfänger oder eine einwandfreie Kopplung Faser/Faser zu gewährleisten, wird bei den bekannten optischen Steckverbindungen das Ende des Lichtwellenleiters mit einem Röhrchen, einer sogenannten Ferrule (auch 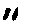 Insert" genannt) konfektioniert.

Die Befestigung der Ferrule auf bzw. an dem Lichtwellenleiter muß zugfest erfolgen, ohne dabei den Lichtwellenleiter zu beschädigen oder gar seine optischen Eigenschaften zu beeinflussen.

Bekannte Befestigungen an einem Lichtwellenleiter stellen zu diesem eine Verbindung her, indem beispielsweise eine Crimpverbindung an den Lichtwellenleiter angebracht wird. Hierbei besteht jedoch die Gefahr, daß der Lichtwellenleiter beschädigt wird oder die optischen Eigenschaften negativ beeinflußt werden.

Demgegenüber ist es die Aufgabe der vorliegenden Erfindung, eine Ferrule für einen Lichtwellenleiter bzw. ein Verfahren zum Befestigen einer Ferrule an einem Lichtwellenleiter zu schaffen, wobei eine sichere Befestigung der Ferrule an dem Lichtwellenleiter, auch bei einer Verwendung in einem Kraftfahrzeug, d.h. bei hohen Ausziehkräften gegeben ist. Zudem sollte eine optische Dämpfung des Lichtwellenleiters möglichst nicht auftreten und die Fertigung mittels des Verfahrens kurze Taktzeiten erlauben und geringe Kosten verursachen.

Diese Aufgabe wird durch eine Ferrule für einen Lichtwellenleiter gemäß dem Patentanspruch 1 gelöst bzw. durch ein Verfahren gemäß Patentanspruch 9 gelöst.

Demnach zeichnet sich eine erfindungsgemäße Ferrule für einen Lichtwellenleiter dadurch aus, daß die Ferrule aus Kunststoff hergestellt ist, wobei die Ferrule an einem Mantel des Lichtwellenleiters verschweißt wird.

Darüber hinaus umfaßt das erfindungsgemäße Verfahren zum Befestigen einer Ferrule an einem Lichtwellenleiter die folgenden Schritte:
- Axial bereichsweises Abisolieren eines Endes des zylindrischen Lichtwellenleiters, wobei radial ein Teil eines Mantels des Lichtwellenleiters entfernt wird;
- Aufschieben der Ferrule über den abisolierten Bereich des Lichtwellenleiters; und
- Zumindest bereichsweises Verschweißen der Ferrule an der Berührungsfläche zum verbliebenen Mantel des Lichtwellenleiters.

Vorteilhafte Weiterbildungen der Ferrule und des Verfahrens sind jeweils in den Unteransprüchen angeführt.

In Übereinstimmung mit der vorliegenden Erfindung wird vorzugsweise die Ferrule, die aus einem Kunststoff besteht, an dem Mantel des Lichtwellenleiters, der ebenfalls aus einem Kunststoff besteht, mittels einer Ultraschall-Verschweißung befestigt.

Die wesentlichen Vorteile nach der vorliegenden Erfindung sind wie folgt:
- Hochfeste Verbindung zwischen Ferrule und Lichtwellenleiter;
- Die Ferrule kann kostengünstig in Spritzgußtechnik gefertigt werden;
- Wirtschaftliche Kabelkonfektionierung und Fertigung der Ferrule;
- Hoher Automatisierungsgrad bei der Montage möglich;
- Montage der Ferrule an dem Lichtwellenleiter kann mit der Bearbeitung der Stirnfläche des Lichtwellenleiters kombiniert werden; und
- Keine Beeinträchtigung der optischen Eigenschaften des Lichtwellenleiters.

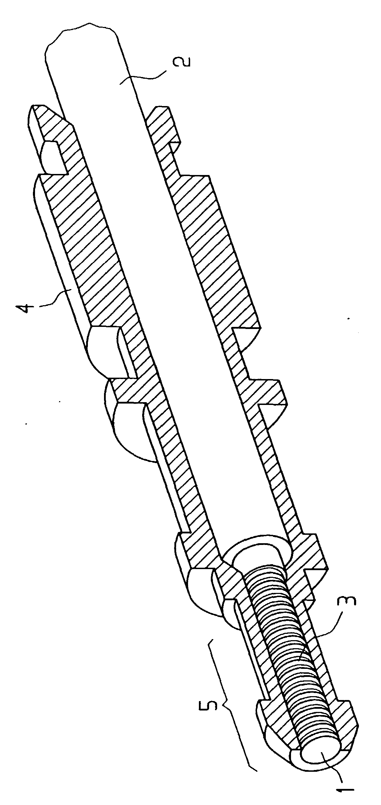

Eine erfindungsgemäße Ferrule für einen Lichtwellenleiter und das erfindungsgemäße Verfahren zum Befestigen einer Ferrule an einem Lichtwellenleiter sind in der Zeichnung dargestellt.

Diese zeigt in:
der Figur eine perspektivische Ansicht eines Lichtwellenleiters mit einer aufgesetzten Ferrule im Teillängsschnitt.

In der Figur ist eine Ferrule 4 aus einem Kunststoffmaterial an einem Lichtwellenleiter 1 angeordnet, der ebenfalls aus einem Kunststoffmaterial gefertigt ist.

Der Lichtwellenleiter 1 weist in der dargestellten Ausführungsform einen lichtleitenden Kern sowie einen zweischaligen Mantel 2 auf, der aus einem Außenmantel und aus einem Innenmantel besteht. Der Innenmantel (radial gesehen) weist in einem Verschweißungsbereich 5 eine geprägte oder geschnittene Außengeometrie auf, die Vertiefungen 3 ausbildet. Die Vertiefungen 3 können vorzugsweise als Gewinde ausgebildet sein.

Dieser zweischalige bzw. zweischichtige Aufbau des Mantels 2 des Lichtwellenleiters 1 aus Außenmantel und Innenmantel ist für die vorliegende Erfindung nicht zwingend erforderlich; ausschlaggebend ist, daß für die Anbringung der Ferrule 4 ein gewisser Puffer zur Verfügung steht, der bei der Befestigung der Ferrule 4 eine Beschädigung des Kerns des Lichtwellenleiters 1 sicher verhindert.

Im Falle der in der Figur gezeigten Ferrule 4 wird also zunächst der Außenmantel des Lichtwellenleiters 1 in einem Bereich abisoliert.

Mittels einer Ultraschallverschweißung wird die Ferrule 4 an dem Lichtwellenleiter 1 befestigt. In der Figur ist beispielhaft der Bereich 5 eingezeichnet, in dem die Schweißverbindung hergestellt wird. Je nach geforderten Festigkeiten der Verbindung zwischen Ferrule 4 und Lichtwellenleiter 1 kann ein mehr oder weniger langer (Verschweißungs-) Bereich 5 vorgesehen werden.

Der Lichtwellenleiter 1 und die Ferrule 4 werden mittels dieser Ultraschallverschweißung dauerhaft und unlösbar miteinander verbunden. Die Verschweißung erfolgt dabei zwischen dem Innenumfang der Ferrule 4 und dem Außenumfang des Innenmantels.

Neben dem Stoffschluß zwischen diesen beiden Bauteilen erfolgt über die Vertiefungen 3 auch ein Formschluß zwischen den beiden Bauteilen.

Beim eigentlichen Verschweißen der Ferrule 4 mit dem Innenmantel 3 (Schutzmantel für den Kern des LWL) des Lichtwellenleiters 1 wird nur der Kunststoff an diesen beiden Teilen aufgeschmolzen, und es wird keine nennenswerte Beeinträchtigung an dem Lichtwellenleiter 1 bewirkt. Da die lichtleitende Faser nicht mechanisch verformt wird, wie etwa beim Crimpen, ist keine Erhöhung der optischen Dämpfung damit verbunden. Die Auszugskraft der Ferrule relativ zum Lichtwellenleiter 1 wird hauptsächlich durch die Güte des Stoffschlusses und durch den Querschnitt der Schweißnaht bestimmt.

Diese Schweißnaht kann bzw. die Schweißnähte können mit einer beliebigen Anzahl von um die Ferrule 4 kreisförmig verteilten Sonotroden erzeugt werden.

Die Innenfläche der Ferrule 4 kann eine glatte Oberfläche aufweisen oder kann auch nicht glatt ausgeführt sein, dann auch mit Vertiefungen, Aussparungen, Rippen, Stegen, etc., um das Verschweißen zu erleichtern. Insbesondere kleinere Materialanhäufungen, wie zum Beispiel an einer Rippe, können einfacher und schneller aufgeschmolzen werden, als eine volle glatte Fläche.

Ein schnelles Verschweißen bringt den Vorteil mit sich, daß eine Beschädigung des Kerns des Lichtwellenleiters 1 ausgeschlossen werden kann.

Die Stirnfläche des Lichtwellenleiters 1 kann abgeschnitten, geschliffen oder gleichzeitig mit der Verschweißung geglättet werden.

Beim Verschweißen der Ferrule 4 mit dem 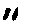 Schutzmantel" des Lichtwellenleiters 1 wird nur der Kunststoff des Schutzmantels aufgeschmolzen, so daß keine spürbare Beeinträchtigung des Kerns (z.B. aus einem Polymer) des Lichtwellenleiters 1 auftritt. Da die Faser beim Schweißen mechanisch nicht gequetscht wird (wie etwa beim Crimpen), ist keine Erhöhung der optischen Dämpfung zu bemerken.

Eine erfindungsgemäße Ferrule 4 für einen Lichtwellenleiter 1 zeichnet sich dadurch aus, daß die Ferrule 4 aus Kunststoff hergestellt ist und am Lichtwellenleiter 1, der auch aus Kunststoff besteht, vorzugsweise mittels Ultraschall verschweißt wird. Am Mantel 2 des Lichtwellenleiters 1 sind dabei Vertiefungen 3 ausgebildet, die neben dem Stoffschluß beim Verschweißen auch einen Formschluß herstellen.

Bezüglich weiterer Merkmale und Vorteile der vorliegenden Erfindung wird ausdrücklich auf die zugehörige Zeichnung und die Patentansprüche verwiesen.

## Patentansprüche

1. Ferrule (4) für einen Lichtwellenleiter (1),
**dadurch gekennzeichnet,** daß
die Ferrule (4) aus Kunststoff hergestellt ist, wobei die Ferrule (4) an einem Mantel (2) des Lichtwellenleiters (1) verschweißt wird.

2. Ferrule (4) nach Anspruch 1,
**dadurch gekennzeichnet,** daß
die Ferrule (4) im wesentlichen eine hohlzylindrische Form aufweist, wobei der Lichtwellenleiter (1) durch den Hohlraum verläuft.

3. Ferrule (4) nach Anspruch 1 oder 2,
**dadurch gekennzeichnet,** daß
der Lichtwellenleiter (1) im Berührungsbereich mit der Ferrule (4) zumindest bereichsweise eine nicht glatte Oberfläche mit Vertiefungen (3) im Mantel (2) aufweist.

4. Ferrule (4) nach Anspruch 1 oder 2,
**dadurch gekennzeichnet,** daß
die Ferrule (4) im Berührungsbereich mit dem Lichtwellenleiter (1) eine glatte Oberfläche aufweist.

5. Ferrule (4) nach einem der Ansprüche 1 bis 4,
**dadurch gekennzeichnet,** daß
die Ferrule (4) mittels Spritzgießen hergestellt ist.

6. Ferrule (4) nach einem der Ansprüche 1 bis 5,
**dadurch gekennzeichnet,** daß
die Ferrule (4) am Außenumfang mehrere Erhebungen und/oder Vertiefungen aufweist.

7. Ferrule (4) nach einem der Ansprüche 1 bis 6,
**dadurch gekennzeichnet,** daß
die Ferrule (4) mittels einer Ultraschallverschweißung an dem Lichtwellenleiter (1) befestigt wird.

8. Ferrule (4) nach Anspruch 7,
**dadurch gekennzeichnet,** daß
die Verschweißung zumindest bereichsweise im Berührungsbereich zwischen Ferrule (4) und Lichtwellenleiter (1) erfolgt.

9. Verfahren zum Befestigen einer Ferrule (4) an einem Lichtwellenleiter (1)
**gekennzeichnet durch** die Schritte:
- Axial bereichsweises Abisolieren eines Endes des zylindrischen Lichtwellenleiters (1), wobei radial ein Teil eines Mantels (2) des Lichtwellenleiters (1) entfernt wird;
- Aufschieben der Ferrule (4) über den abisolierten Bereich des Lichtwellenleiters (1); und
- Zumindest bereichsweises (5) Verschweißen der Ferrule (4) an der Berührungsfläche zum verbliebenen Mantel (2) des Lichtwellenleiters (1).

10. Verfahren nach Anspruch 9,
**gekennzeichnet durch** den Schritt: Herstellender Ferrule (4) aus einem Kunststoff.

11. Verfahren nach Anspruch 9 oder 10,
**gekennzeichnet durch** den Schritt: Herstellender Ferrule (4) mittels eines Spritzgußverfahrens.

12. Verfahren nach einem der Ansprüche 9 bis 11,
**gekennzeichnet durch** den Schritt: Herstellendes Lichtwellenleiters (4) aus einem Kunststoff.

13. Verfahren nach einem der Ansprüche 9 bis 12,
**gekennzeichnet durch** den Schritt: Herstellendes Mantels (2), der aus einem radial außenliegendem Teil des Mantel und/oder einem radial innenliegenden Teil des Mantel besteht, aus einem Kunststoff.

14. Verfahren nach einem der Ansprüche 9 bis 13,
**gekennzeichnet durch** den Schritt: Verschweißen der Ferrule (4) mit dem Lichtwellenleiter (1) mittels Ultraschall.

15. Verfahren nach Anspruch 14,
**gekennzeichnet durch** den Schritt: Verwenden einer Mehrzahl von Sonotroden, die um die Ferrule (4) kreisförmig angeordnet sind.
